# EUROPEAN PATENT APPLICATION

(11) **EP 4 368 656 A1**
(43) Date of publication of application: **15.05.2024**
(21) Application number: 22862525.7
(22) Date of filing: 27.01.2022
(51) Int. Cl.: C08G 69/26, C08L 77/06

(54) **HIGH-TEMPERATURE-RESISTANT SEMI-AROMATIC POLYAMIDE AND PREPARATION METHOD THEREFOR, COMPOSITION, AND MOLDED ARTICLE**

(30) Priority: 30.08.2021 CN 202111003945
(71) Applicant: Cathay Biotech Inc., Shanghai 201203 (CN); Cibt America Inc., Newark DE 19713 (US)
(72) Inventor: FENG, Wutong, Shanghai 201203 (CN); ZHAO, Yuanbo, Shanghai 201203 (CN); LIU, Xiucai, Shanghai 201203 (CN)
(74) Representative: karo IP
(86) International application number: PCT/CN2022/074277
(87) International publication number: WO 2023/029374

(57) **Abstract**

The present invention provides a high temperature resistant semi-aromatic polyamide resin and a preparation method therefor, a composition and a molding product. Polymeric monomers of the polyamide resin include a diamine monomer and a diacid monomer, the diamine monomer includes a diamine monomer A1 and a diamine monomer A2, and the diacid monomer includes a diacid monomer B1 and a diacid monomer B2, wherein the carbon atom number C_{A1} of the diamine monomer A1 and the carbon atom number C_{A2} of the diamine monomer A2 satisfy that C_{A1}-C_{A2}≥4, the diacid monomer B1 is selected from aromatic dicarboxylic acids with a carbon atom number of 7-12 and derivatives thereof, and the diacid monomer B2 is selected from aliphatic dicarboxylic acids with a carbon atom number of 4-18. The polyamide resin of the present invention has better fluidity. The greater the degree of randomness of the polymer chains and the less entanglement between the chains, the better the fluidity of the copolyamide. By means of a one-step condensation polymerization process for the high-temperature-resistant semi-aromatic polyamide of the present invention, melting and discharging are easy, and a melt has good fluidity and stability.

## Description

### Technical Field

The present disclosure belongs to the field of high polymer materials, and specifically relates to a high temperature resistant semi-aromatic polyamide.

### Background

With high heat resistance, dimensional stability, good mechanical strength and melting processability, high temperature resistant polyamide has been widely used in electronic devices, peripheral parts of automotive engines, aerospace and other fields. Semi-aromatic polyamide with a long carbon chain is particularly important. A rigid benzene ring structure endows materials with excellent dimensional stability and mechanical strength, and a long carbon chain structure with low internal rotational site resistance endows materials with good toughness and low water absorption. However, due to a large number of entanglements of molecular chains of the semi-aromatic polyamide with a long carbon chain and poor fluidity of a melt, which bring great difficulties to the melt discharge stage of the one-step polymerisation process and the injection moulding of the finished product.

At present, methods for improving the fluidity of a polymer are mainly adopted from the following aspects: (1) reducing the molecular weight of the polymer; (2) adding a flow modifier; (3) increasing the processing temperature; and (4) increasing the shearing rate or the shearing stress. However, all the above methods have the following inevitable problems. Although decrease of the molecular weight of the polymer can greatly decrease the melt viscosity and increase the melt fluidity of the polymer, mechanical properties of a material will be greatly reduced at the same time. When the flow modifier is added for melting and blending with the polyamide, the problems of compatibility between an additive and a matrix, precipitation and smell of the additive and the like shall also be taken into account. Although increase of the processing temperature can improve the fluidity of a polyamide melt, the problems of aging and degradation at high temperature, production of gel by crosslinking and the like will also be caused by a narrow processing window of the high temperature resistant polyamide and too high processing temperature, thereby further increasing the difficulties of melting and processing. The polyamide melt is a pseudoplastic fluid, and the apparent viscosity of the polyamide melt is decreased with increase of the shearing rate or the shearing stress. However, mechanical degradation of a material will also be caused by a too high shearing rate or a too high shearing stress.

A patent No. CN101200591B discloses a high temperature resistant nylon composite material with high fluidity. The fluidity is improved by introducing 0.1-10 wt.% of a flow modifier (such as a silicone compound, a montanic acid derivative and a high molecular wax lubricant) into a semi-aromatic polyamide matrix with poor fluidity. The flow modifier is treated with a coupling agent, followed by blending and granulation with the polyamide matrix to improve the compatibility. The flow modifier has excellent external and internal lubrication effects and can effectively reduce the friction force between the polyamide matrix and processing equipment as well as the friction force between polyamide molecular chains. A patent No. CN1368994A discloses a polyamide composition with high fluidity. The fluidity of polyamide with a high molecular weight is improved by adding 0.5-20 wt.% of a polyamide oligomer that has a higher melting point than a polyamide matrix with a high molecular weight into the polyamide matrix with a high molecular weight. Relative to the polyamide with a high molecular weight, the polyamide oligomer (with an average molecular weight of not greater than 5,000 g/mol) is used as a plasticizer to achieve a certain plasticizing effect, and has good compatibility with the polyamide matrix with a high molecular weight. However, the method has the disadvantages that two polyamides need to be prepared first and then are melted and blended, and a complicated process is achieved. A patent No. CN101798456B discloses a nylon composite material with a star-shaped branched structure. The fluidity is improved by adding 0.05-5 wt.% of a star-shaped branching agent containing at least 3 reactive functional groups (such as tricarboxylic benzenesulfonic acid, triaminotriphenyl methane and trihydroxypropylene oxide) into a polyamide matrix. The star-shaped branching agent is used as a plasticizer and enables rolling motion of molecules, thereby improving the fluidity of the polyamide during injection molding. However, relevant fluidity improvement data are not provided specifically. The method has the disadvantages that partial crosslinking of the polyamide matrix is caused by introduction of the branching agent, the fluidity of a melt is also greatly reduced by the crosslinking while moderate crosslinking is conducive to improvement of mechanical properties of a material, and how to find a balance between the two points is a difficult problem.

At present, methods for improving the fluidity of polyamide disclosed in patents are mainly adopted from the perspective of blending. The fluidity of a polyamide melt is improved by introducing a small molecular or high molecular lubricant, a polyamide with a low molecular weight same as a matrix, a polyolfin with a linear or branched structure, a liquid crystal polymer, a star-shaped branching agent and the like into a polyamide matrix based on twin-screw melt extrusion. By means of a melt blending method, the melt processing performance of the semi-aromatic polyamide with a long carbon chain can be improved to a certain extent. However, the problems of melting and discharging of the one-step polymerization process cannot be solved from the perspective of polymerization.

### Summary

In order to solve the problems of the prior art and products, the present disclosure provides a high temperature resistant semi-aromatic polyamide resin and a preparation method therefor.

Polymeric monomers of the polyamide resin include a diamine monomer and a diacid monomer, the diamine monomer includes a diamine monomer A1 and a diamine monomer A2, and the diacid monomer includes a diacid monomer B1 and a diacid monomer B2,
where a carbon atom number C_{A1} of the diamine monomer A1 and a carbon atom number C_{A2} of the diamine monomer A2 satisfy that C_{A1}-C_{A2}≥4,
the diacid monomer B1 is selected from aromatic dicarboxylic acids with a carbon atom number of 7-12 and derivatives thereof, and the diacid monomer B2 is selected from aliphatic dicarboxylic acids with a carbon atom number of 4-18.

Further, the derivatives of the aromatic dicarboxylic acids with a carbon atom number of 7-12 include esters of the aromatic dicarboxylic acids with a carbon atom number of 7-12, and preferably include dimethyl terephthalate and dimethyl isophthalate.

In the present disclosure, the diamine monomer is abbreviated as a diamine. The C_{A1} is used for representing the carbon atom number of the diamine A1, and similarly, the C_{A2} is used for representing the carbon atom number of the diamine A2. Both the C_{A1} and the C_{A2} are an integer. A C_{A1}-C_{A2} difference is an integer.

In some embodiments, a carbon atom number C_{A1} of the diamine monomer A1 and a carbon atom number C_{A2} of the diamine monomer A2 satisfy that 4≤C_{A1}-C_{A2}≤10.

In some preferred embodiments of the present disclosure, the diamine monomer A1 may include one or more of 1,8-octanediamine, 1,9-nonanediamine, 1,10-decanediamine, 1,11-undecanediamine, 1,12-dodecanediamine, 1,13-tridecanediamine and 1,14-tetradecanediamine.

In some preferred embodiments of the present disclosure, the diamine monomer A2 may include one or more of 1,4-butanediamine, 1,5-pentanediamine, 1,6-hexanediamine, 1,7-heptanediamine, 1,8-octanediamine, 1,9-nonanediamine and 1,10-decanediamine.

In some preferred embodiments of the present disclosure, the diamine monomer A1 is selected from diamines with a carbon atom number of 8-14, and is preferably selected from diamines with a carbon atom number of 8-11.

In some preferred embodiments of the present disclosure, the diamine monomer A2 is selected from diamines with a carbon atom number of 4-10, and is preferably selected from diamines with a carbon atom number of 4-7.

In some preferred embodiments of the present disclosure, the diacid monomer B1 includes one or more of terephthalic acid, dimethyl terephthalate, isophthalic acid and dimethyl is ophthalate.

In some preferred embodiments of the present disclosure, the diacid monomer B2 includes one or more of 1,4-succinic acid, 1,5-glutaric acid, 1,6-adipic acid, 1,7-heptanedioic acid, 1,8-octanedioic acid, 1,9-nonanedioic acid, 1,10-decanedioic acid, 1,11-undecanedioic acid, 1,12-dodecanedioic acid, 1,13-tridecanedioic acid, 1,14-tetradecanedioic acid, 1,15-pentadecanedioic acid, 1,16-hexadecanedioic acid, 1,17-heptadecanedioic acid and 1,18-octadecanedioic acid.

In some preferred embodiments of the present disclosure, a molar ratio of total moles of the diamine monomer A2 and the diacid monomer B2 to total moles of all the polymeric monomers is between 0.040:1 and 0.099:1.

In some preferred embodiments of the present disclosure, a molar ratio of the diamine monomer to the diacid monomer is between 1.01:1 and 1.03:1.

The diamine may be a diamine and derived from a chemical substance or a biological substance, preferably a diamine derived from a biological substance.

The diacid may be a diacid derived from a chemical substance or a biological substance, preferably a diacid derived from a biological substance.

The polyamide resin may include diamine units and diacid units prepared by polymerization between the diamine monomer and the diacid monomer, and a total weight of the diamine units and the diacid units is 97 % or more of the polyamide resin, preferably 99% or more of the polyamide resin.

The polyamide resin may contain an additive, and the additive preferably constitutes 0.01% to 3% by weight of the polyamide resin.

The polyamide resin may further include an additive, and the additive is selected from an end capping agent, a catalyst, a flame retardant, an antioxidant, an ultraviolet absorber, an infrared absorber, a crystallization nucleating agent, a fluorescent brightening agent, an antistatic agent, and combinations thereof.

Further, the antioxidant may select from one or more of a phenolic antioxidant, an inorganic phosphate antioxidant, a phosphite antioxidant and a carbon free radical scavenger antioxidant. The catalyst may select from one or more of potassium hypophosphite, sodium hypophosphite, calcium hypophosphite, magnesium hypophosphite and zinc hypophosphite. The end capping agent may select from one or more of acetic acid, benzoic acid and cyclohexanecarboxylic acid.

Long-chain semi-aromatic polyamides have poor melt fluidity due to the intertwining of the long chains. In the present application, a third copolymer monomer (amine monomer A2) and a fourth copolymer monomer (acid monomer B2) are introduced for copolymerization. After a large number of experiments, it was found that copolyamides using two diamine monomers with a difference in the number of carbon atoms greater than or equal to 4 (i.e., CA1-CA2≥4) have better fluidity than those with a difference in the number of carbon atoms of less than 4 (i.e., CA1-CA2<4), and the larger the difference, the larger the degree of randomness of the polymer chain, the fewer the entanglements between the chains, and the better the fluidity of the copolyamides.

In some preferred embodiments of the present disclosure, the polyamide resin further comprises a polyamine, and the polyamide resin comprises 0.8 wt.% or less, preferably 0.5 wt.% or less, preferably 0.2 wt.% or less, or preferably 0 by weight of the polyamine. The polyamine may select from the group consisting of thioether polyamine compounds, polyethyleneimine and polyaminopolyether amines. Preferably, the polyamine has a number-average molecular weight of 2,500-5,000 g/mol.

In some embodiments, small amounts of a polyamine are added into the polyamide resin during preparation of the polyamide resin for in-situ polymerization.

In some embodiments, the introduction of an appropriate amount of polyamine results in a trace amount of chemical bonding between the polymer chains of the polyamide, and the tensile, flexural and impact strengths are further improved.

Further, the polyamide resin has a relative viscosity of 1.8-2.6, preferably 2.0-2.5.

Further, the polyamide resin has a melting point of 265-315°C, preferably 271-310°C.

Further, the polyamide resin has a tensile strength of 65-105 MPa, preferably 75-95 MPa.

Further, the polyamide resin has a bending strength of 80-140 MPa, preferably 90-125 MPa.

Further, the polyamide resin has a flow length of equal to or greater than 600 mm, preferably equal to or greater than 850 mm.

The present disclosure further provides a method for preparing a high temperature resistant semi-aromatic polyamide resin. The method includes the following steps:
(1) heating an aqueous solution of a polyamide salt to 120-140°C, draining water out to concentrate the aqueous solution, and then heating the aqueous solution to 230-260°C for reaction; and
(2) reducing the pressure by degassing.

A person skilled in the art knows that the polyamide salt is also known as a nylon salt. The nylon salt is a salt formed by a reaction between the polymeric monomers (including a diamine monomer A1, a diamine monomer A2, a diacid monomer B1 and a diacid monomer B2), and the nylon salt is subjected to a polycondensation reaction to obtain a polyamide.

Further, the method includes: (1) heating an aqueous solution of a polyamide salt to 120-140°C, draining water out to concentrate the aqueous solution, and then heating the solution to 240-255°C to carry out a reaction; and
(2) reducing the pressure by degassing.

Further, the method includes a step (a) before step (1): adding a diamine monomer A1, a diamine monomer A2, a diacid monomer B1 and a diacid monomer B2 into water, heating the thus obtained system to 70-95°C, and optionally holding the temperature at 70-95°C for 0.5-3 hours to form an aqueous solution of a polyamide salt.

Further, the method includes a step (a) before step (1): adding a diamine monomer A1, a diamine monomer A2, a diacid monomer B1 and a diacid monomer B2 into water, heating the compounds to 70-90°C, and optionally performing heat preservation at 70-90°C for 0.5-3 hours to form an aqueous solution of a polyamide salt;
and in step (a), the heating process is carried out in an atmosphere of nitrogen or an inert gas. The inert gas includes one or more of argon or helium.

Further, in step (a), the heat preservation is performed for 0.5-2 h.

In step (1), concentrating the aqueous solution comprises draining water out to achieve a polyamide salt weight concentration of 40wt. %-80wt. %., preferably 55 wt. % -65 wt.%.

In step (1), the reaction is carried out for 0.5-2 h, preferably 1-1.5 h.

In step (1), during the reaction, the pressure is maintained at 2.0-3.5 MPa, preferably 2.5-3 MPa.

In step (2), the reducing pressure by degassing is performed to reduce the pressure in the reaction system to 0-0.1 MPa (gauge pressure), preferably 0-0.02 MPa (gauge pressure).

Unless otherwise stated or apparently contradictory, the pressure in the present disclosure refers to gauge pressure.

In step (2), the reaction system has a temperature of 295-335°C after the reduction of pressure is completed.

Further, the method preferably includes a step (3): vacuumizing treatment and vacuumizing to a vacuum degree of -0.02 MPa or less, preferably -0.05 MPa to -0.1 MPa,
and optionally, maintaining the vacuum degree for 0-300 s, preferably 0-90 s, more preferably 5-90 s, and more preferably 5-50 s.

Further, the method further includes a step (4): discharging, stretching into strips and pelletizing.

Further, the method includes adding an additive at any stage of step (a), step (1), step (2), optional step (3) and optional step (4), the additive constitutes 0.01% to 3% by weight of the total mass of the monomers, and the additive includes an end capping agent, a catalyst, a flame retardant, an antioxidant, an ultraviolet absorber, an infrared absorber, a crystallization nucleating agent, a fluorescent brightening agent, an antistatic agent, and combinations thereof.

Further, the end capping agent includes C₂₋₁₆ aliphatic carboxylic acids, C₇₋₁₀ aromatic carboxylic acids or a combination of them. The aliphatic carboxylic acid end capping agent is structurally a monocarboxylic acid with a linear chain, a branched chain or a ring structure, and is preferably a saturated monocarboxylic acid with a linear chain, a branched chain or a ring structure.

Further, the catalyst includes phosphates and hypophosphites, preferably includes phosphates of alkali metals and/or alkaline earth metals and hypophosphites of alkali metals and/or alkaline earth metals, and preferably includes potassium hypophosphite, sodium hypophosphite, calcium hypophosphite, magnesium hypophosphite, and combinations thereof.

Further, the antioxidant is selected from one of a phenolic antioxidant, an inorganic phosphate antioxidant, a phosphite antioxidant, a carbon free radical scavenger antioxidant, and combinations thereof.

Further, in step (4), the stretching into strips and pelletizing may be performed by water cooling, and the temperature of cooling water is, for example, 10-30°C.

As an embodiment of the present disclosure, a method for preparing a high temperature resistant semi-aromatic polyamide resin includes the following steps:
(a) adding a diamine monomer A1, a diamine monomer A2, a diacid monomer B1 and a diacid monomer B2 into water, heating the thus obtained system to 70-90°C, and holding the temperature at 70-90°C for 0.5-3 hours to form an aqueous solution of a polyamide salt;
   (1) heating the aqueous solution of a polyamide salt to 120-140°C, concentrating the polyamide salt solution comprises draining water out to achieve a polyamide salt weight concentration of 40-80 wt.%, and then heating the aqueous solution to 240-255°C for reaction at a pressure of 2.5-3 MPa for 0.5-2 h;
   (2) reducing the pressure of the reaction system to 0-0.1 MPa (gauge pressure) by degassing, where the reaction system has a temperature of 295-335°C after the reduction of pressure is completed;
   (3) vacuumizing to a vacuum degree of -0.05 MPa to -0.1 MPa, and maintaining the vacuum degree for 0-300 s; and
   (4) discharging, stretching into strips and pelletizing.

Parameters in the step (a) and the steps (1) to (4) are preferably defined as described above.

The present disclosure preferably provides a composition including the high temperature resistant semi-aromatic polyamide resin according to any one of the above descriptions.

The present disclosure preferably provides a product prepared by using the high temperature resistant semi-aromatic polyamide resin according to any one of the above descriptions or the composition as a raw material.

Compared with the prior art, the embodiments of the present disclosure at least have the following advantages.
1. Due to mutual entanglement of long chains of a long-chain semi-aromatic polyamide, the polyamide melt has fluidity deviation. In the present disclosure, a third comonomer and a fourth comonomer are introduced for copolymerization. It is found through lots of experiments that a copolyamide obtained has better fluidity when the difference between the carbon atom numbers of the used two diamine monomers is equal to or greater than 4. In addition, a larger difference indicates a higher degree of irregularity of polymer chains, less entanglement of the chains and better fluidity of a copolyamide.
2. A one-step condensation and polymerization process of the high temperature resistant semi-aromatic polyamide of the present disclosure has the advantages that melting and discharging are easy, and the polyamide melt has good fluidity and stability.

### Detailed Description of the Embodiments

In order to make the purposes, technical schemes and advantages of the present disclosure clearer, the technical schemes in the embodiments of the present disclosure are clearly and completely described below in combination with the embodiments of the present disclosure. Obviously, the described embodiments are a part of the embodiments of the present disclosure, rather than all of the embodiments. Based on the embodiments of the present disclosure, all other embodiments obtained by persons of ordinary skill in the art without making creative labor fall within the scope of protection of the present disclosure.

Melting point was tested with reference to the standard ISO 11357-3, and heating rate is 20°C/min.

Relative viscosity ηᵣ was tested as follows:
a concentrated sulfuric acid method using an Ubbelohde viscometer includes: accurately weighing 0.5±0.0002 g of a dried polyamide sample, adding 50 mL of concentrated sulfuric acid (96%) to dissolve the sample, and measuring and recording the flow time (*t₀*) of the concentrated sulfuric acid and the flow time (t) of the polyamide solution in a constant-temperature water bath at 25±0.02°C.

A calculation formula of the relative viscosity is as follows: relative viscosity *ηᵣ*=*t*/*t₀*
where *t* refers to the flow time of the polyamide solution; and *t₀* refers to the flow time of the concentrated sulfuric acid as a solvent.

Methods for testing mechanical properties are as follows: a bending test is carried out with reference to the standard ISO-178, and the test is carried out at 2 mm/min; a tensile test is carried out with reference to the standard ISO-572-2, and the test is carried out at 50 mm/min; and an impact test is carried out with reference to the standard ISO 180.

An Archimedes helix flow length (referred to as flow length) test is carried out at a temperature that is 25°C higher than the polyamide melting point and at an injection pressure of 80 bar.

In the below embodiments, an antioxidant H10 (Bruggemann) is used as an antioxidant, acetic acid is used as an end capping agent, and sodium hypophosphite is used as a catalyst. Unless otherwise stated or apparently contradictory, "%" in the present disclosure and the embodiments represents a mass percentage relative to the total mass of monomers.

### Example 1

9.28 mol of 1,9-nonanediamine, 9.10 mol of terephthalic acid, 0.90 mol of 1,5-pentanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a 50 wt.% polyamide salt solution. The reaction system was heated to 130°C, then the water of the system was discharged to concentrate the system until the solution had a concentration of 65 wt.%. Then, the solution was heated to 240°C for reaction at a pressure of 2.5 MPa for 1 h. The pressure of the reaction system was reduced to 0 MPa (gauge pressure) by degassing, where the reaction system had a temperature of 317°C after the reduction of pressure was completed. Then, a copolymer melt was obtained by vacuumizing to -0.07MPa for 20s. The copolymer melt was subjected to stretching into strips and pelletizing to obtain a high temperature resistant semi-aromatic polyamide.

### Example 2

9.28 mol of 1,9-nonanediamine, 9.10 mol of terephthalic acid, 0.90 mol of 1,5-pentanediamine, 0.90 mol of adipic acid, 0.8% of polyethyleneimine with a molecular weight of 3,000, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a 50 wt.% polyamide salt solution. The system was heated to 130°C, then the water of the system was discharged to concentrate the system until the solution had a concentration of 65 wt.%. Then, the solution was heated to 240°C for reaction at a pressure of 2.5 MPa for 1 h. The pressure of the reaction system was reduced to 0 MPa (gauge pressure) by degassing, where the reaction system had a temperature of 317°C after the reduction of pressure was completed. Then, a copolymer melt was obtained by vacuumizing to -0.07MPa for 20s. The copolymer melt was subjected to stretching into strips and pelletizing to obtain a high temperature resistant semi-aromatic polyamide.

### Example 3

9.28 mol of 1,9-nonanediamine, 9.10 mol of terephthalic acid, 0.90 mol of 1,5-pentanediamine, 0.90 mol of adipic acid, 0.4% of polyethyleneimine with a molecular weight of 3,000, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a 50 wt.% polyamide salt solution. The system was heated to 130°C, then the water of the system was discharged to concentrate the system until the solution had a concentration of 65 wt.%. Then, the solution was heated to 240°C for reaction at a pressure of 2.5 MPa for 1 h. The pressure of the reaction system was reduced to 0 MPa (gauge pressure) by degassing, where the reaction system had a temperature of 317°C after the reduction of pressure was completed. Then, a copolymer melt was obtained by vacuumizing to -0.07MPa for 20s. The copolymer melt was subjected to stretching into strips and pelletizing to obtain a high temperature resistant semi-aromatic polyamide.

### Example 4

9.20 mol of 1,10-decanediamine, 9.10 mol of terephthalic acid, 0.90 mol of 1,5-pentanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a 50 wt.% polyamide salt solution. The system was heated to 130°C, then the water of the system was discharged to concentrate the system until the solution had a concentration of 60 wt.%. Then, the solution was heated to 245°C for reaction at a pressure of 2.6 MPa for 1.2 h. The pressure of the reaction system was reduced to 0.01 MPa (gauge pressure) by degassing, where the reaction system had a temperature of 323°C after the reduction of pressure was completed. Then, a copolymer melt was obtained by vacuumizing to -0.08MPa for 10s. The copolymer melt was subjected to stretching into strips and pelletizing to obtain a high temperature resistant semi-aromatic polyamide.

### Example 5

9.21 mol of 1,11-undecanediamine, 9.10 mol of terephthalic acid, 0.90 mol of 1,5-pentanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a 50 wt.% polyamide salt solution. The system was heated to 135°C, then the water of the system was discharged to concentrate the system until the solution had a concentration of 70 wt.%. Then, the solution was heated to 245°C for reaction at a pressure of 3.0 MPa for 1.5 h. The pressure of the reaction system was reduced to 0 MPa (gauge pressure) by degassing, where the reaction system had a temperature of 309°C after the reduction of pressure was completed. Then, a copolymer melt was obtained by vacuumizing to -0.06MPa for 30s. The copolymer melt was subjected to stretching into strips and pelletizing to obtain a high temperature resistant semi-aromatic polyamide.

### Example 6

9.20 mol of 1,12-dodecanediamine, 9.10 mol of terephthalic acid, 0.90 mol of 1,5-pentanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 250°C for reaction at a pressure of 3.0 MPa for 2 h. The pressure of the reaction system was reduced to 0.01 MPa (gauge pressure) by degassing, where the reaction system had a temperature of 308°C after the reduction of pressure was completed. Then, a copolymer melt was obtained by vacuumizing to -0.09MPa for 30s. The copolymer melt was subjected to stretching into strips and pelletizing to obtain a high temperature resistant semi-aromatic polyamide.

### Example 7

9.20 mol of 1,12-dodecanediamine, 9.10 mol of terephthalic acid, 0.90 mol of 1,5-pentanediamine, 0.90 mol of adipic acid, 0.8% of polyethyleneimine with a molecular weight of 3,000, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 250°C for reaction at a pressure of 3.0 MPa for 2 h. The pressure of the reaction system was reduced to 0.01 MPa (gauge pressure) by degassing, where the reaction system had a temperature of 308°C after the reduction of pressure was completed. Then, a copolymer melt was obtained by vacuumizing to -0.09MPa for 30s.The copolymer melt was subjected to stretching into strips and pelletizing to obtain a high temperature resistant semi-aromatic polyamide.

### Example 8

9.23 mol of 1,13-tridecanediamine, 9.10 mol of terephthalic acid, 0.90 mol of 1,5-pentanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 255°C for reaction at a pressure of 3.0 MPa for 2 h. The pressure of the reaction system was reduced to 0.01 MPa (gauge pressure) by degassing, where the reaction system had a temperature of 301°C after the reduction of pressure was completed. Then, a copolymer melt was obtained by vacuumizing to -0.10MPa for 10s. The copolymer melt was subjected to stretching into strips and pelletizing to obtain a high temperature resistant semi-aromatic polyamide.

### Example 9

9.23 mol of 1,13-tridecanediamine, 9.10 mol of terephthalic acid, 0.90 mol of 1,6-hexanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 255°C for reaction at a pressure of 3.0 MPa for 2 h. The pressure of the reaction system was reduced to 0.01 MPa (gauge pressure) by degassing, where the reaction system had a temperature of 303°C after the reduction of pressure was completed. Then, a copolymer melt was obtained by vacuumizing to -0.10MPa for 10s. The copolymer melt was subjected to stretching into strips and pelletizing to obtain a high temperature resistant semi-aromatic polyamide.

### Example 10

9.76 mol of 1,10-decanediamine, 9.48 mol of terephthalic acid, 0.52 mol of 1,5-pentanediamine, 0.52 mol of octanedioic acid, 0.02% of a catalyst, 0.3% of an antioxidant, 0.20% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 130°C, then the water of the system was discharged to concentrate the system until the solution had a concentration of 60 wt.%. Then, the solution was heated to 245°C for reaction at a pressure of 2.6 MPa for 1.2 h. The pressure of the reaction system was reduced to 0.01 MPa (gauge pressure) by degassing, where the reaction system had a temperature of 334°C after the reduction of pressure was completed. Then, a copolymer melt was obtained by vacuumizing to -0.08 MPa for 10s. The copolymer melt was subjected to stretching into strips and pelletizing to obtain a high temperature resistant semi-aromatic polyamide.

### Example 11

9.20 mol of 1,9-nonanediamine, 9.02 mol of terephthalic acid, 0.98 mol of 1,5-pentanediamine, 0.98 mol of 1,10-decanedioic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 130°C, then the water of the system was discharged to concentrate the system until the solution had a concentration of 65 wt.%. Then, the solution was heated to 240°C for reaction at a pressure of 2.5 MPa for 1 h. The pressure of the reaction system was reduced to 0 MPa (gauge pressure) by degassing, where the reaction system had a temperature of 313°C after the reduction of pressure was completed. Then, a copolymer melt was obtained by vacuumizing to -0.07 MPa for 20s. The copolymer melt was subjected to stretching into strips and pelletizing to obtain a high temperature resistant semi-aromatic polyamide.

### Example 12

9.47 mol of 1,11-undecanediamine, 9.24 mol of terephthalic acid, 0.76 mol of 1,6-hexanediamine, 0.76 mol of 1,12-dodecanedioic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 135°C, then the water of the system was discharged to concentrate the system until the solution had a concentration of 70 wt.%. Then, the solution was heated to 245°C for reaction at a pressure of 3.0 MPa for 1.5 h. The pressure of the reaction system was reduced to 0 MPa (gauge pressure) by degassing, where the reaction system had a temperature of 301°C after the reduction of pressure was completed. Then, a copolymer melt was obtained by vacuumizing to -0.06 MPa for 30s. The copolymer melt was subjected to stretching into strips and pelletizing to obtain a high temperature resistant semi-aromatic polyamide.

### Example 13

9.23 mol of 1,13-tridecanediamine, 9.10 mol of terephthalic acid, 0.90 mol of 1,8-octanediamine, 0.90 mol of adipic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 255°C for reaction at a pressure of 3.0 MPa for 2 h. The pressure of the reaction system was reduced to 0.01 MPa (gauge pressure) by degassing, where the reaction system had a temperature of 298°C after the reduction of pressure was completed. Then, a copolymer melt was obtained by vacuumizing to -0.10MPa for 10s. The copolymer melt was subjected to stretching into strips and pelletizing to obtain a high temperature resistant semi-aromatic polyamide.

### Comparative Example 1

9.23 mol of 1,13-tridecanediamine, 9.10 mol of terephthalic acid, 0.90 mol of 1,12-dodecanediamine, 0.90 mol of 1,12-dodecanedioic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 140°C, then the water of the system was discharged to concentrate the system until the solution had a concentration of 70 wt.%. Then, the solution was heated to 255°C for reaction at a pressure of 3.0 MPa for 2 h. The pressure of the reaction system was reduced to 0.01 MPa (gauge pressure) by degassing, where the reaction system had a temperature of 296°C after the reduction of pressure was completed. Then, a copolymer melt was obtained by vacuumizing to -0.10MPa for 10s. The copolymer melt was subjected to stretching into strips and pelletizing to obtain a high temperature resistant semi-aromatic polyamide.

### Comparative Example 2

9.20 mol of 1,10-decanediamine, 9.10 mol of terephthalic acid, 0.90 mol of 1,9-nonanediamine, 0.90 mol of 1,12-dodecanedioic acid, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 130°C, then the water of the system was discharged to concentrate the system until the solution had a concentration of 60 wt.%. Then, the solution was heated to 245°C for reaction at a pressure of 2.6 MPa for 1.2 h. The pressure of the reaction system was reduced to 0.01 MPa (gauge pressure) by degassing, where the reaction system had a temperature of 317°C after the reduction of pressure was completed. Then, a copolymer melt was obtained by vacuumizing to -0.08 MPa for 10s. The copolymer melt was subjected to stretching into strips and pelletizing to obtain a high temperature resistant semi-aromatic polyamide.

### Comparative Example 3

9.20 mol of 1,10-decanediamine, 9.10 mol of terephthalic acid, 0.90 mol of 1,5-pentanediamine, 0.90 mol of adipic acid, 1.5% of polyethyleneimine with a molecular weight of 3,000, 0.03% of a catalyst, 0.3% of an antioxidant, 0.24% of an end capping agent and water were mixed evenly at a stirring rate of 70 rpm, the thus obtained system was heated to 90°C in a nitrogen atmosphere and maintained at the temperature for 1 h to prepare a polyamide salt solution with a concentration of 50 wt.%. The system was heated to 130°C, then the water of the system was discharged to concentrate the system until the solution had a concentration of 60 wt.%. Then, the solution was heated to 245°C for reaction at a pressure of 2.6 MPa for 1.2 h. The pressure of the reaction system was reduced to 0.01 MPa (gauge pressure) by degassing, where the reaction system had a temperature of 323°C after the reduction of pressure was completed. Then, a copolymer melt was obtained by vacuumizing to -0.08 MPa for 10s. The copolymer melt was subjected to stretching into strips and pelletizing to obtain a high temperature resistant semi-aromatic polyamide.

**Table 1**

| Example | C_{A1} - C_{A2} | ηᵣ | Melting point (°C) | Tensile strength (MPa) | Bending strength (MPa) | Notch impact strength (kJ/m²) | Flow length (mm) |
|---|---|---|---|---|---|---|---|
| Example 1 | 4 | 2.32 | 292 | 86 | 117 | 8.4 | 1100 |
| Example 2 | 4 | 2.36 | 292 | 90 | 121 | 9.6 | 1030 |
| Example 3 | 4 | 2.35 | 292 | 89 | 119 | 9.2 | 1060 |
| Example 4 | 5 | 2.36 | 298 | 87 | 110 | 10.4 | 1040 |
| Example 5 | 6 | 2.32 | 284 | 85 | 105 | 10.8 | 990 |
| Example 6 | 7 | 2.38 | 283 | 84 | 98 | 12.6 | 950 |
| Example 7 | 7 | 2.36 | 283 | 89 | 100 | 13.1 | 900 |
| Example 8 | 8 | 2.36 | 276 | 78 | 95 | 14.8 | 920 |
| Example 9 | 7 | 2.36 | 278 | 80 | 98 | 13.5 | 900 |
| Example 10 | 5 | 2.33 | 309 | 94 | 113 | 9.9 | 880 |
| Example 11 | 4 | 2.38 | 288 | 77 | 109 | 7.8 | 1080 |
| Example 12 | 5 | 2.36 | 276 | 90 | 109 | 9.7 | 930 |
| Example 13 | 5 | 2.35 | 273 | 75 | 90 | 12.9 | 880 |
| Comparative Example 1 | 1 | 2.32 | 271 | 74 | 87 | 12.8 | 430 |
| Comparative Example 2 | 1 | 2.32 | 292 | 85 | 104 | 10.5 | 480 |
| Comparative Example 3 | 5 | 2.34 | 299 | 88 | 109 | 4.6 | 430 |

Finally, it is to be noted that the above embodiments are only used to illustrate the technical schemes of the present disclosure, and are not intended to limit the present disclosure. Although the present disclosure is illustrated in detail with reference to the embodiments, it is to be understood that for persons of ordinary skill in the art, modifications of the technical schemes recorded in the embodiments or equivalent substitutions of some or all of technical features can still be made, and all the modifications or substitutions shall not make the essence of the corresponding technical schemes departed from the scope of the technical schemes of the embodiments of the present disclosure.

## Claims

1. A semi-aromatic polyamide resin, **characterized in that** the polymeric monomers of the polyamide resin comprise a diamine monomer and a diacid monomer, the diamine monomer comprises a diamine monomer A1 and a diamine monomer A2, and the diacid monomer comprises a diacid monomer B1 and a diacid monomer B2,
wherein a carbon atom number C_{A1} of the diamine monomer A1 and a carbon atom number C_{A2} of the diamine monomer A2 satisfy that C_{A1}-C_{A2}≥4, the diacid monomer B1 is selected from aromatic dicarboxylic acids with a carbon atom number of 7-12 and derivatives thereof, and the diacid monomer B2 is selected from aliphatic dicarboxylic acids with a carbon atom number of 4-18.

2. The high temperature resistant semi-aromatic polyamide resin according to claim 1, wherein the diamine monomer A1 comprises one or more of 1,8-octanediamine, 1,9-nonanediamine, 1,10-decanediamine, 1,11-undecanediamine, 1,12-dodecanediamine, 1,13-tridecanediamine and 1,14-tetradecanediamine; and/or,
the diamine monomer A2 is selected from diamines with a carbon atom number of 4-10 and preferably comprises one or more of 1,4-butanediamine, 1,5-pentanediamine, 1,6-hexanediamine, 1,7-heptanediamine, 1,8-octanediamine, 1,9-nonanediamine and 1,10-decanediamine, and the diamine monomer A2 is preferably selected from diamines with a carbon atom number of 4-7; and/or,
the diacid monomer B1 comprises one or more of terephthalic acid, dimethyl terephthalate, isophthalic acid and dimethyl isophthalate; and/or,
the diacid monomer B2 comprises one or more of 1,4-succinic acid, 1,5-glutaric acid, 1,6-adipic acid, 1,7-heptanedioic acid, 1,8-octanedioic acid, 1,9-nonanedioic acid, 1,10-decanedioic acid, 1,11-undecanedioic acid, 1,12-dodecanedioic acid, 1,13-tridecanedioic acid, 1,14-tetradecanedioic acid, 1,15-pentadecanedioic acid, 1,16-hexadecanedioic acid, 1,17-heptadecanedioic acid and 1,18-octadecanedioic acid; and/or,
the polyamide resin comprises diamine units and diacid units prepared by a polymerization between the diamine monomer and the diacid monomer, and a total weight of the diamine units and the diacid units is 97 % or more of the polyamide resin, and preferably 99% or more of the polyamide resin; and/or,
the content of a polyamine in the polyamide resin is 0.8% or less, preferably 0.5% or less, preferably 0.2% or less, or preferably 0, and the polyamine is selected from one or more of thioether polyamine compounds, polyethyleneimine and polyaminopolyether amines; and/or,
the polyamide resin comprises an additive, the additive preferably constitutes 0.01% to 3% by weight of the polyamide resin, and the additive is selected from an end capping agent, a catalyst, a flame retardant, an antioxidant, an ultraviolet absorber, an infrared absorber, a crystallization nucleating agent, a fluorescent brightening agent, an antistatic agent, and combinations thereof.

3. The high temperature resistant semi-aromatic polyamide resin according to claim 1, wherein
the molar ratio of the sum of the diamine monomer A2 and the diacid monomer B2 in moles to the sum of all the polymeric monomers in moles is (0.040-0.099):1; and/or,
the molar ratio of the diamine monomer to the diacid monomer is (1.01-1.03): 1.

4. The high temperature resistant semi-aromatic polyamide resin according to any one of claims 1-3, wherein
the polyamide resin has a relative viscosity of 1.8-2.6, preferably 2.0-2.5; and/or,
the polyamide resin has a melting point of 265-315°C, preferably 271-310°C; and/or,
the polyamide resin has a tensile strength of 65-105 MPa, preferably 75-95 MPa; and/or,
the polyamide resin has a bending strength of 80-140 MPa, preferably 90-125 MPa; and/or,
the polyamide resin has a flow length of equal to or greater than 600 mm, preferably equal to or greater than 850 mm.

5. A method for preparing a high temperature resistant semi-aromatic polyamide resin, comprising the following steps:
(1) heating an aqueous solution of a polyamide salt to 120-140°C, draining water out to concentrate, and then heating the aqueous solution to 230-260°C for reaction; and
(2) reducing pressure by degassing.

6. The method according to claim 5, wherein
in step (1), the draining and the concentrating are performed until the polyamide salt has a concentration of 40-80 wt.%, preferably 55-65 wt.%; and/or,
in step (1), the reaction is carried out for 0.5-2 h, preferably 1-1.5 h; and/or,
in step (1), during the reaction, the pressure is maintained at 2.0-3.5 MPa, preferably 2.5-3 MPa; and/or,
in step (2), the reduction of pressure by degassing is performed to reduce the pressure in the reaction system to 0-0.1 MPa (gauge pressure), preferably 0-0.02 MPa (gauge pressure);
in step (2), the reaction system has a temperature of 295-335 °C after the reduction of pressure is completed.

7. The method according to claim 5, **characterized in that** the method comprises a step (a) before step (1): adding a diamine monomer A1, a diamine monomer A2, a diacid monomer B1 and a diacid monomer B2 into water, heating the thus obtained system to 70-95°C, and optionally holding the temperature at 70-95°C for 0.5-3 hours to form an aqueous solution of a polyamide salt;
and/or, the method comprises a step (3): vacuumizing treatment: vacuumizing to a vacuum degree of -0.02 MPa or less, preferably -0.05 MPa to -0.1 MPa, and optionally, maintaining the vacuum degree for 0-300 s, preferably 0-90 s, and more preferably 5-90 s.

8. The method according to claim 5, 6 or 7, wherein that the method comprises adding an additive at any stage of step (a), step (1), step (2) and optional step (3), the additive accounts for 0.01-3% of the total mass of the monomers, and the additive comprises, but is not limited to, any one of end capping agent, catalyst, flame retardant, antioxidant, ultraviolet absorber, infrared absorber, crystallization nucleating agent, fluorescent brightening agent and antistatic agent or a combination of two or more thereof.

9. A composition, **characterized in that** the composition comprises the high temperature resistant semi-aromatic polyamide resin according to any one of claims 1-4.

10. A product prepared by using the high temperature resistant semi-aromatic polyamide resin according to any one of claims 1-4 or the composition according to claim 9 as a raw material.
